Europäisches Patentamt

European Patent Office

Office européen des brevets

(11) Publication number: **0 352 501**
**A2**

(12) **EUROPEAN PATENT APPLICATION**

(21) Application number: **89112020.6**

(22) Date of filing: **01.07.89**

(51) Int. Cl.⁴: **B25J 15/04**

(30) Priority: **29.07.88 IT 5333588 U**

(43) Date of publication of application:
**31.01.90 Bulletin 90/05**

(84) Designated Contracting States:
**AT CH DE ES FR GB IT LI NL SE**

(71) Applicant: **MAPOR CALDART S.p.A.**
**C.so Orbassano n. 416/10**
**I-10137 Torino(IT)**

(72) Inventor: **Caldart, Armando**
**C.so Racconigi n. 5**
**I-10100 Torino(IT)**
Inventor: **Kaiser, Siegmund Hans**
**Grunewald Strasse 44**
**D-7440 Nürtigen(DE)**

(74) Representative: **Lotti, Giorgio**
**c/o Ing. Barzano' & Zanardo S.p.A. Via**
**Cernaia 20**
**I-10122 Torino(IT)**

(54) **Holding hand for manipulators and robots with automatic quick changing and substitution unit of the holding hand.**

(57) A holding hand for manipulators and robots having a hollow body equipped with plates sliding in coaxial way in its interior in the reciprocal approaching and moving away due to the operation of actuating means orthogonally movable with respect to the plates; said plates hold at their ends, protruding from the body, hooking means of the holding hand arm, whilst the actuating means consist of a pin which is directly connected in the body exterior to the actuating elements of the head of the robot or manipulator; the plates are directly constrained to the pin by means of sliding couplings along such angle-plates that at each movement of the pin towards the interior (exterior) of the body corresponds a movement of the two plates towards the exterior (interior) of said body.

Fig.1

Xerox Copy Centre

# HOLDING HAND FOR MANIPULATORS AND ROBOTS WITH AUTOMATIC QUICK CHANGING AND SUBSTITUTION UNIT OF THE HOLDING HAND

The invention regards a holding hand for manipulators and robots with automatic quick changing and substitution unit of the holding hand.

Holding hands of robots and manipulating devices are extremely important as the main holding, locking and movement operations are relied to said hands, and said operations must be performed in a perfectly safe and reliable way in such complex and sophisticated devices.

One of the greatest technical problems regarding the holding hands is the one relating articulation/deviation, that is the capability of transmitting a central control to two side elements with the employment of articulated joints, hinges and so forth; obviously, this will signify an increase of the reciprocal clearances in the lengthening of the operation of the holding hand.

Purpose of the invention is to propose an extremely simple holding hand offering high reliability ensured by two only elements, articulated and sliding to each other, without any intermediate elements which would complicate the working and would create clearances increasing with time.

Purpose of the invention is also to propose an holding hand equipped with means for its automated quick change and for its substitution in order to further accelerate substitution times reducing down times.

For the above purposes and others which will be better appreciated as the description follows, the invention proposes to realize a holding hand for manipulators and robots where a hollow body carries in its interior plates sliding in coaxial way in the reciprocal approaching and moving away due to the operation of actuating means orthogonally movable with respect to the plates; said plates hold at their ends, protruding from the body, hooking means of the holding hand arms, whilst the actuating means consist of a pin which is directly connected in the body exterior to the actuating elements of the head of the robot or manipulator, wherein the plates are directly constrained to the pin by means of sliding couplings along such angle-plates that at each movement of the pin towards the interior (exterior) of the body corresponds a movement of the two plates towards the exterior (interior) of said body.

The description of the holding hand of the invention now follows and reference is made to the attached drawings:

Fig. 1 is a schematic perspective view of the holding hand of the invention;

Fig. 2 is a partially sectioned side view of the holding hand of Fig. 1;

Fig. 3 is a section according to trace III-III of Fig. 2;

Fig. 4, 5 and 6 are respectively front top and perspective view of a part of the holding hand.

The holding hand of the invention consists of a body 10 with notches 11 obtained on its appendixes 12. In said appendixes 12 a through hole 13 is obtained, in communication with the inner recess 14 of the body 10, along which a substantially cylindrical pin 15 is sliding. Said pin in its end extending out of the hole 13, carries a spline 16 which allows its locking on the head of the robot or manipulator; the end portion of pin 15 inserted into the body 10, is truncated cone shaped 17; the body of said pin inserted into the body 10 also has traverse splines 18 and 19 obtained on two opposite sides of said pin and a face 20 and 21 and a projection 22 and 23 are respectively obtained. Faces 20 and 21, projections 22 and 23 and splines 18 and 19 are obtained by removing material from the body of the pin 15.

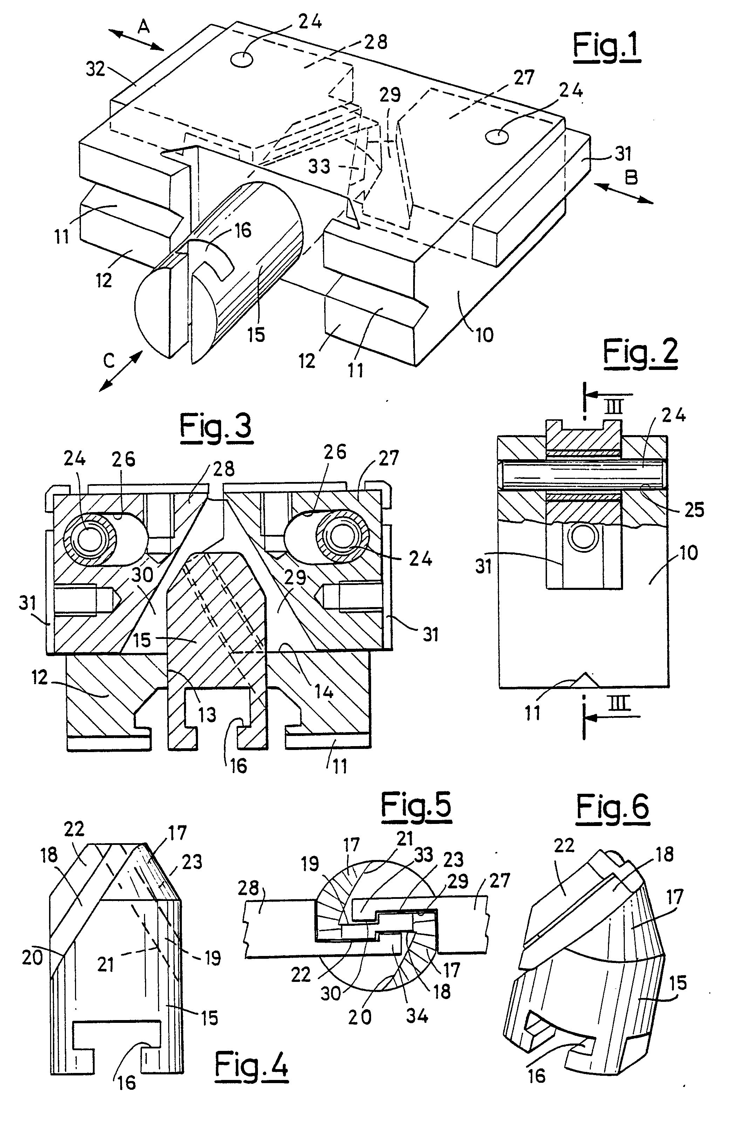

Two identical blocks 27 and 28 are inserted in the recess 14 of the body 10, and said blocks slide within the recess 14 sides; pins 24 are inserted in holes 25 of the body 10 and in slots 26 of the blocks 27 and 28 so as to guide the latter ones in their movements according to arrows A and B of Fig. 1. The blocks 27 and 28 carry traverse splines, respectively 29 and 30, in the inner part to body 10, and in said splines projections 22 and 23 of pin 15 are inserted, whilst end projections 33 and 34 of blocks 27 and 28 are inserted in splines 18 and 19 of pin 15. Finally, the ends 31 and 32 of blocks 27 and 28 protrude from the respective holes of body 10 and carry traditional locking surfaces of the arms of the holding hand and said surfaces are sufficiently wide to allow a satisfactory hooking for any type of arm.

The above mentioned device operates as follows:

The pin 15 is hooked to the head of the robot or manipulator by means of splines 16 which allows an automatic hooking/unhooking and a quick change of the holding hand; in the meantime splines 11 obtained in the appendixes 12 of the body 10 form an exact reference on the head of the robot or manipulator and this further facilitates the substitution and quick changing of said hand.

The actuating means of the robot or manipulator operate a movement of pin 15 in both directions of arrow C of Fig. 1; as the pin, in the interior of body 10, carries projections 22 and 23 sliding along splines 29 and 30 of plates 27 and 28 - whilst the latter ones carry projections 33 and 34 sliding along splines 18 and 19 of pin 15 - a reciprocal coupling is formed between plates 27 and 28 and pin 15 so that when thrusting pin 15 towards the interior of the body 10, the plates 27 and 28 are simultaneously moved towards the exterior of body 10. On the contrary, the extraction of the pin 15 from the body 10 causes the simultaneous movement of the plates 27 and 28 towards the interior of the body 10. The movement of the pin along arrow C in both directions causes corresponding orthogonal movements to the plates 27 and 28 along arrows A and B; this is due to the fact that reciprocal sliding couplings among said element are formed by means of angle plates which do not require the aid of further kinematic motions in the unit interior, so that clearances subject to increasing with time are avoided.

Evidently, this embodiment offers high reliability and remarkable precision of the movements; this would be more difficult to obtain if further elements would be interposed between pin 15 and plates 27 and 28.

Movements of different entity may be obtained (strokes, forces) in the plates 27 and 28 relating to the movement of the pin 15, by simply varying the inclination of the splines and the projections of said three elements: pin and plates.

## Claims

1. Holding hand for manipulators and robots of the type having a hollow body carrying plates sliding in coaxial way in its interior in the reciprocal approaching and moving away due to the operation of actuating means orthogonally movable with respect to the plates; said plates hold at their ends, protruding from the body, hooking means of the holding hand arm, whilst the actuating means consist of a pin which is directly connected in the body exterior to the actuating elements of the head of the robot or manipulator, wherein the plates are directly constrained to the pin by means of sliding couplings along such angle-plates that at each movement of the pin towards the interior (exterior) of the body corresponds a movement of the two plates towards the exterior (interior) of said body.

2. Holding hand according to claim 1 wherein said sliding coupling is carried out by means of projections and splines obtained in the pin in opposite position with respect to the axial plane of symmetry of said pin; said projections and splines converge to the end of the pin, interior to the body, and engage in a sliding way in corresponding projections and oblique splines obtained in the plates.

3. Holding hand according to claim 1 wherein the plates carry sliding slots on pins, inserted into holes of the body to drive the movements.

4. Holding hand according to claim 1 wherein the end of the pin protruding from the body has splines for the locking and quick changing of the hand on actuating means of the head of the robot or manipulator.

5. Holding hand according to claim 1 wherein sideways to the pin the body carries appendixes having reference splines for quick hooking on heads of robots or manipulators.

Fig.1

Fig.2

Fig.3

Fig.4

Fig.5

Fig.6